# EUROPEAN PATENT SPECIFICATION

(11) **EP 1 568 430 B1**
(45) Date of publication and mention of the grant of the patent: **21.05.2008**
(21) Application number: 05003935.3
(22) Date of filing: 23.02.2005
(51) Int. Cl.: B23B 45/00

(54) **Power transmission device for power tool**
Kraftübertragungseinrichtung für ein Werkzeug
Dispositif de transmission de force pour un outil

(30) Priority: 27.02.2004 JP 2004055225
(43) Date of publication of application: 31.08.2005
(73) Proprietor: Shibuya Company, Ltd., Hatsukaichi-shi, Hiroshima 738-0021 (JP)
(72) Inventor: Sasaguchi, Noriyuki, c/o Shibuya Co., Ltd., Hatsukaichi-shi Hiroshima 738-0021 (JP); Ora, Naotaka, c/o Shibuya Co., Ltd., Hatsukaichi-shi Hiroshima 738-0021 (JP)
(74) Representative: Klunker . Schmitt-Nilson . Hirsch

(56) References cited:
- BE-A- 383 789
- FR-A- 2 576 232
- GB-A- 1 095 067
- US-A- 3 767 313
- US-A- 4 791 833
- US-A- 5 277 527

## Description

### TECHNICAL FIELD

The present invention relates to a power transmission device for a power tool, according to the preamble of claim 1. Such device transmits rotation to a tip tool.

### BACKGROUND OF THE INVENTION

A powered tool such as for example a core drill is normally provide at a power transmission device thereof with a clutch to prevent excessive torque from being imposed on a motor as a source of power. A power tool which requires small size and light weight generally adopts so called a slip clutch having a relatively simple structure. The slip clutch is structured to have a disk-shaped or toroidal friction plate comprised of a flat plate held tight between a gear and a clutch disk or a rotational object such as for example a rotary shaft, thereby is adapted to transmit turning force with the use of friction between contact surfaces pressed against each other (see Japanese Patent Application Laid-open No. Hei10-296574 and also BE 383789 A, which discloses a power transmission device according to the preamble of claim 1.). Maximum torque values transmittable via a slip clutch can be adjusted via adjustment of the strength of pressure, and when transmitted torque has reached its predetermined maximum torque, the friction plate comes into a slip condition, thereby preventing a motor from being imposed by excessive torque.

Incidentally, when an operating efficiency is taken into consideration, a powered tool is desirable if it sustains as much as possible long hours of use while a clutch is in operation. Specifically, a slip clutch for use in a powered tool is desirable if it can continue transmitting predetermined torque from a motor side to a tip tool side in a stable manner as long as possible even under a slipped condition.

However, there have been such defects in the conventional slip clutches that as the number of slips or total slip time increases, transmission torque under a slipped condition drastically deteriorates or seizure develops in a relatively short period of time. Thus, the conventional powered tools can be of service for only a relatively short period of time once a slip clutch is in a slipped condition.

US-A-3 767 313 describes a power transmission device having cavities receiving balls between a gear and a rotator.

The present invention has been made in view of the above problems, and it is an object of the invention to provide a power transmission device for a power tool, which is capable of transmitting predetermined torque in a stable manner and for longer period of time under a condition where a clutch slips, and further to provide a core drill using the power transmission device.

### DISCLOSURE OF THE INVENTION

The present invention provides a power transmission device for a power tool, comprising the features of claim 1. The friction members have two or more friction faces which are spaced apart from each other.

When divided into two or more sections, the friction faces of the friction members will be formed with gaps through which lubricant is facilitated to flow or by which lubricant is resupplied to the friction faces in a facilitated manner. Upon this division, material shavings generated during slip can be readily discharged together with lubricant. Further, such gaps facilitate divergence of heat generated due to friction. Thus, improvement in resuppliability of lubricant, divergeability of heat, and dischargeability of material shavings will prevent the status of the friction faces under a slip condition from changing suddenly, thereby will further stabilize transmission torque under a slip condition and allow stable and long-hour transmission of torque. Stable torque contributes to good operationality of a power tool under a slip condition, and for instance an operation for stopping a power tool can be effected promptly, readily and credibly. As the friction members, an example can be given where radial or concentric grooves have been formed in a friction face of a toroidal friction member composed of a flat plate. When resuppliability of lubricant, divergeability of heat, and dischargeability of material shavings are taken into consideration, radially-grooved friction members are more preferable than concentrically-grooved ones.

Although it is conceivable that oiled friction faces of the friction members of the slip clutch will withstand longer-time slip operation, however the friction faces of the friction members are in close contact with the counterparts, so that it is difficult to oil onto the friction faces even if the lubricant is of low viscosity. For example in a hand-held power tool, grease of high viscosity is often used from a viewpoint of maintenance-free operation, to lubricate periphery of the friction members. In such a case, oiling onto the friction members is more difficult than a case where lubricant of low viscosity is used. In this respect, the present invention will be more preferable for stabilizing transmission torque and improving durability of a hand-held power tool in which grease is used for lubrication, because the present invention does not oil onto the friction members but divides them into two or more sections to stabilize the transmission torque under a slip condition and thereby improve durability.

The present inventors further studied about a structure which stabilizes torque under a slip condition of the friction members. The friction members are normally used under a pressurized condition, slip-initiation torque is mainly adjusted in consideration of face conditions of the friction faces of the friction members and intensity of the pressurization. Conventional slip clutches adopt a structure in which friction members are sandwiched from both sides thereof, and both side faces of the friction members serve as a friction face. However, it is rare the face conditions of both the friction members are the same, and rather normal the face conditions are different from each other. Thus, if pressurizing is set up with respect to a plurality of friction members having different face conditions, the number of correlation between pressurizing and the friction faces and the number of friction faces will be the same, and also the slip-initiation torque will be set up with respect to each friction face. However, both sides of the friction plate are two sides of the same plate, which shows an example of no simple peripheral conditions of the friction members, whereby it is not easy to comprehend both the set-up conditions. Further, when friction faces exist plurally, a slippery friction face will slip preferentially, so that only one of the friction faces will substantially serve as a friction face in most cases. In such a case, set-up should be made in conformity with a slippery friction face, however it is actually no easy to determine which is a most slippery friction face.

In view of the above study results, it is preferable if an installation structure of the friction members is such that the friction members should be installed into any of a gear or a rotator, which are in contact with the friction members, rather than the friction members should be held tightly at both sides thereof in a manner as has been conventionally done. Thus, such a structure in which the friction members has been installed into a gear or a rotator will provide single-sided friction faces allows the slip initiation torque to be readily and accurately set up. When assemblability is taken into consideration, it is more preferable if the structure has the friction members installed in the gear.

Further study was made on a power transmission device, which is more excellent in durability. For instance, in conventional slip clutches employing conventional toroidal friction members comprised of flat plates, seizure is often caused to the friction members in the course of use the members. In this respect for instance, forming radial grooves in a friction face of a toroidal friction member to divide the friction face into two or more sections realized improvement to some degrees but was not sufficient. Subsequent detailed studies made in the friction faces of the friction members revealed that it is assumed not entire face of the conventional friction members is necessarily in contact with a counterpart from a microscopic point of view. More specifically, it was assumable from the studies that very small area of the entire friction face actually serves as a friction face. Because of the very small area actually in contact, it is assumed pressure far exceeding an average surface pressure (calculated value) has been applied locally. Under the conditions, rapid abrasion or material destruction such as surface peeling of the friction faces may occur, and destructed pieces generated by surface destruction of the friction faces may remain undischarged. If seizure occurs subsequently, slip function of the clutch will be lost.

Consequently, further studies revealed that it is more preferable if the friction member is comprised of two or more friction members, each of which is independently detachable with respect to the gear and has a friction face. This is ascribable to a fact that the friction face of the friction members according to the present invention is smaller than the counterpart of the conventional tabular toroidal friction members, whereby a friction face with higher face accuracy is readily obtainable. This is also ascribable to an assumption that if friction member pieces having uniform and excellent face accuracy only are selected and used out of a plurality of those independently provided as a friction member, the face accuracy could be improved comparatively readily. According to the present invention, a friction face with higher face accuracy is available, and local imposition of greater pressure is positively prevented. As a result, seizure will be prevented from occurring on a friction face, whereby durability of a power transmission device will be increased.

A conceivable structure in which each friction member piece should be installed in a gear is for instance that holes into which friction member pieces should be installed are formed in a side face of a gear and into which projections formed on each friction member piece should be inserted in a releasable manner. Such a structure will be advantageous if the number of holes formed in the side face of the gear is relatively large and the number of friction member pieces to be installed into the gear is adjusted to alter the area of the friction face, which is one of face conditions of the friction face. For instance, when the number of holes is six, in addition to a case where all the six holes are installed with friction member pieces, the area of the friction face can be adjusted if the friction member pieces are installed into two, three or four out of the six holes in a stepped manner. If the area of the friction face is successfully adjusted, then flexibility in setting up slip initiation torque which is set up with mainly face conditions of a friction face and pressure will be increased, thereby setting up the set-up torque, i.e. slip initiation torque to desirable torque will be facilitated. It should be noted maximum transmission torque is set up, for instance with rated torque of a motor equipped being taken into consideration.

Further, various shapes are conceivable with respect to the friction face to be formed on the friction member pieces, however circular form is preferable. The reason is that, unless the friction face is circular, the slip initiation torque is likely to vary depending on the orientation of the friction face even if the pressure is unchanged, however, if the friction face is circular, the relation between the pressure and friction face becomes constant irrespective of the orientation of the installed friction face. Furthermore, if the friction face is circular, the friction member pieces may be installed into the gear with no attention being paid to the orientation of the pieces, whereby installation is advantageously facile.

As described above, the power transmission device for a core drill according to the present invention allows predetermined torque to be transmitted in a stable manner under a slip condition of a slip clutch, whereby excelling in operationality of a power tool under a slip condition. Once operationality is established, the power tool can be stopped quickly, readily and reliably, for instance under a slip condition.

### BRIEF DESCRIPTION OF THE DRAWINGS

Fig. 1 is a perspective view showing a core drill according to embodiments;
Fig. 2 is a cross sectional view showing a power transmission section of a core drill;
Fig. 3 is an exploded perspective view showing components mounted to a first shaft of the power transmission section;
Fig. 4 is an enlarged perspective view showing a gear and friction members;
Fig. 5 is a cross sectional view showing a portion of an A-A cross section of Fig. 4;
Fig. 6 is a perspective view showing another application of the core drill according to the embodiments; and
Fig. 7 is a chart showing an electric current and voltage of a motor as results of slip operation tests.

### BEST MODE FOR CARRYING OUT THE INVENTION

Hereinafter, preferred embodiments of a core bit according to the present invention will be concretely described with reference to the drawings.

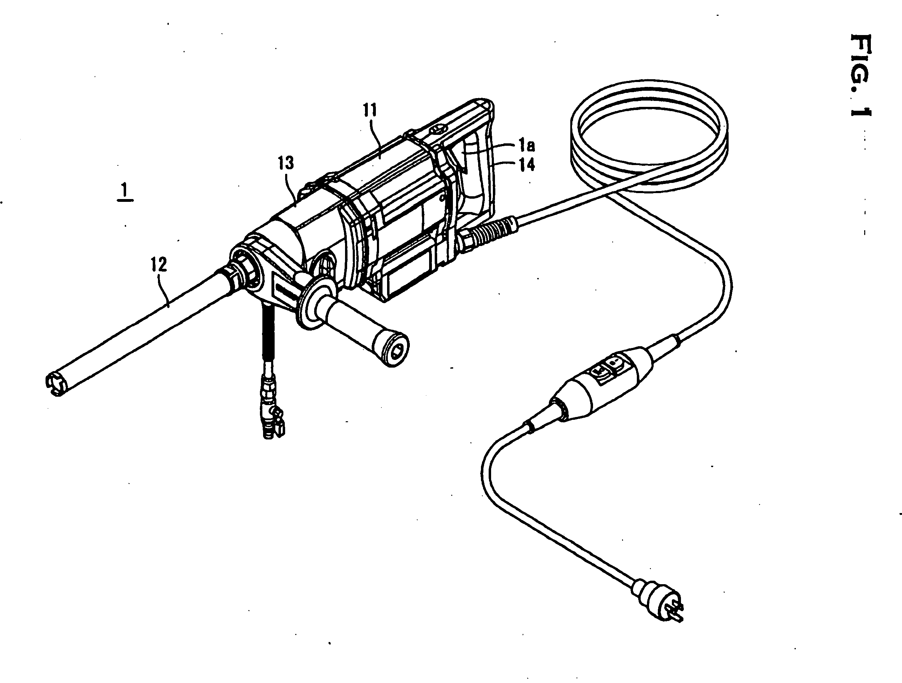

Symbol "1" in Fig. 1 indicates a so-called hand-held core drill, i.e. power tool. The core drill **1** has a motor **11** as a source of power integrally incorporated therein, and a power transmission section **13**, i.e. power transmission device, which transmits rotation of the motor **11** is incorporated between the motor **11** and a core bit **12,** i.e. tip tool. The core drill **1** further has a grip **14** on which a switch **1a** is provided. Switching on or off the switch **1a** operates or stops the core drill **1.**

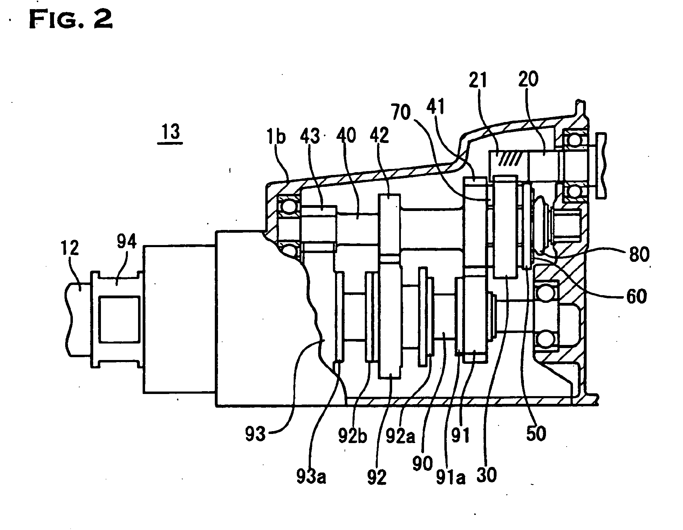

As Fig. 2 shows, the power transmission section **13** has a gear **30** meshing with a tip gear **21** of an input shaft **20** which transmits rotation of the motor **11.** The gear **30** is equipped in a bore thereof with a bush **31**, and the bush **31** is pivotally supported in a slidable manner on a first shaft **40** which is rotatably supported on a housing **1b** of the core bit **12.** Thus, the gear **30** rotates in concert with the rotation of the tip gear **21** of the input shaft **20,** independently of the rotation of the first shaft **40.** The first shaft **40** is integrally formed with three speed change gears for shifting gears, namely a first speed change gear **41,** a second speed change gear **42,** and a third speed change gear **43.** Transmission of rotation from the gear **30** on the first shaft **40** to the speed change gears **41, 42, 43** is effected via a slip clutch mechanism which is now being described.

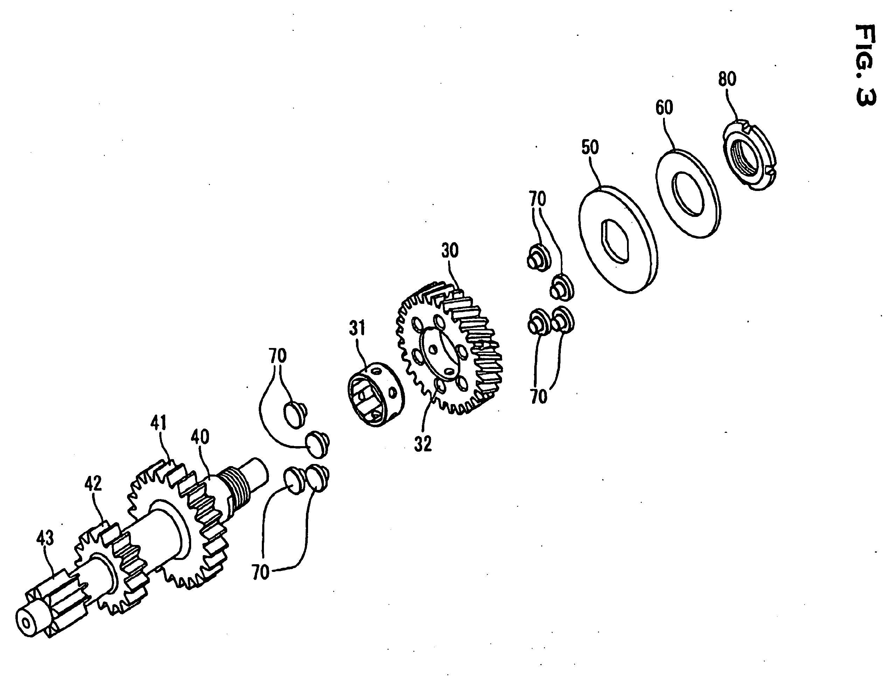

As Figs. 2 and 3 show, such a plurality of components are fitted onto the first shaft **40** as, in addition to the speed change gears **41, 42, 43** and the gear **30,** a disk-shaped clutch disk **50** and a belleville spring **60** which are positioned adjacent to the gear **30.** Out of the components, the clutch disk **50** is integrally fixed to the first shaft **40,** and the belleville spring **60** is rotatably fitted onto the first shaft **40.** There is interposed friction members **70,** i.e. friction pieces, between the gear **30** and the first speed change gear **41,** and similarly interposed friction members **70** between the gear **30** and the clutch disk **50.** Further, on the first shaft **40,** there is screwed a clamping nut **80** for pressing the belleville spring **60** and the clutch disk **50** against the gear **30.** The nut **80** is used to press the belleville spring **60** against the gear **30** side in a assembled state. Thus, the gear 30 and the first speed change gear **41,** i.e. a rotator are in a state where they are pressed against each other via the friction members **70.** Similarly, the gear **30** and the clutch disk **50,** i.e. a rotator are in a state where they are pressed against each other via the friction members **70.** Under the pressurized state, rotation of the gear **30** can be transmitted to the first speed change gear **41** and the clutch disk **50** with the use of friction.

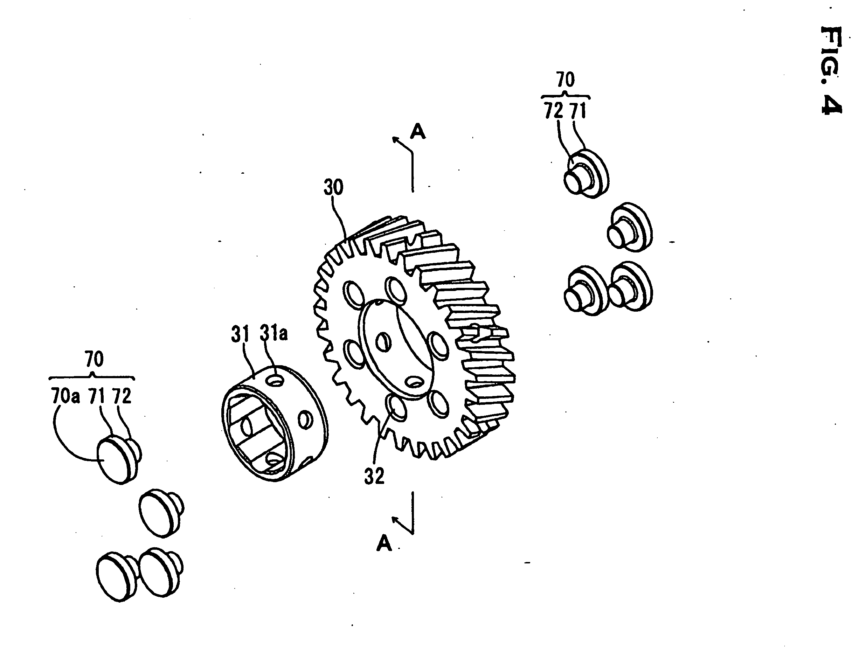

As Fig. 4 shows, the friction members **70** are a stepped cylindrical member integrally formed of a cylindrical larger-diameter-section **71** having a flat friction face **70a** and a smaller-diameter-section **72,** and the members **70** are fitted in the gear **30** for use. The gear **30** accepting the members **70** have six through-holes **32** opening to the both sides. Specifically, the friction members **70** are installed in the gear **30** with the smaller-diameter-section **72** fitted in through-holes **32** of the gear **30.** Then, as the figure shows, the friction members **70** are installed in each side of the gear **30** by the number of four in the present embodiments. Each friction member **70** is independently installed in the gear **30** in a releasable manner, and is independently spaced apart the other friction members **70.**

As will be understood from the above description, the first speed change gear **41** and the clutch disk **50** are in contact with the friction members **70** at a plurality of circular friction faces **70a,** which are independently disposed. Therefore, rotation of the gear **30** is transmitted to the first speed change gear **41** and the clutch disk **50** via friction at the friction faces **70a.** The first speed change gear **41** is integrally formed with the first shaft **40,** and the clutch disk **50** is assembled so as to rotate integrally with the first shaft **40.** Therefore, rotations of the first speed change gear **41** and the clutch disk **50** are transmitted directly to the first shaft **40.** The core drill 1 has a structure in which a nut **80** is clamped to allow press the friction faces 70a against the first speed change gear **41** and the clutch disk **50**, and maximum transfer torque of a power transmission section **13** is adjustable through adjustment of a clamped condition of the nut **80**. Further in the core drill **1,** the setting of the maximum transfer torque is also adjustable through increase or decrease of the number of friction members **70** to be installed in the gear **30.**

As Fig. 2 shows, the power transmission section **13** has a second shaft **90** on which three gears, namely fourth, fifth and sixth speed change gears **91, 92, 93** driven by the speed change gears **41, 42, 43** on the first shaft **40,** respectively are mounted, and rotation is transmitted from the first shaft **40** via these speed change gears to second shaft **90.** Out of the driven speed change gears **91, 92, 93,** only the fifth speed change gear **92** rotates constantly and integrally with the second shaft **90,** and under the condition depicted by Fig. 2, rotation is transmitted from the second speed change gear **42** to the driven fifth speed change gear **92.** The fifth speed change gear **92** is adapted to move longitudinally along the second shaft **90,** and when the fifth speed change gear **92** moves on the right in the figure and meshes teeth **92a** thereof with teeth **91a** of the fourth speed change gear **91,** rotation is transmitted from the first speed change gear **41** to the driven fourth speed change gear **91.** In contrast, when the fifth speed change gear **92** moves on the left in the figure and meshes teeth **92b** thereof with teeth **93a** of the sixth speed change gear **93,** rotation is transmitted from the third speed change gear **43** to the driven sixth speed change gear **93.** The second shaft **90** is fitted at one end thereof with a mounting head **94** for fixing the core bit **12,** and as the second shaft **90** rotates, the core bit **12** mounted to the mounting head **94** also rotates.

The number of holes formed in the gear **30** is six in the present embodiment, however any particular restriction is not imposed regarding the number, and any desirable number is applicable as far as the strength of the gear is maintained. Further in the present embodiment, through holes **32** are provided in a manner that the center of all the through holes **32** is positioned on a circle centering on a rotating shaft of the gear **30,** however when the diameter of the gear **30** is extremely larger than that of the larger-diameter-section **71** of the friction members **70,** the number of the circle centering on the rotating shaft of the gear **30** may be increased to two or more to increase the number of the holes through providing holes on each circle. Such holes to be provided are not necessarily through holes.

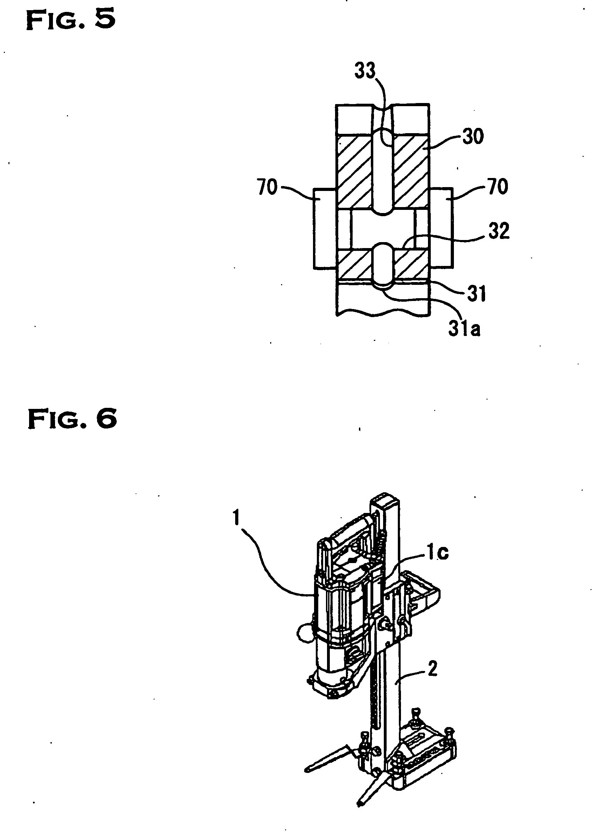

As Fig. 5 shows, the gear **30** has through holes **32** perforated to the both sides thereof and further has holes **33** orthogonal to the through holes **32** and extending radially. The holes **33** are through holes, which each has an opening on an internal surface facing the teeth of the gear **30** and first shaft **40.** Further, as Figs. 4 and 5 show, a metal bush **31** is also formed with holes **31a,** and the metal bush **31** is fitted so that the holes **31a** are communicated with the holes **33** of the gear **30.** Therefore, each opening of the holes **33** of the gear **30** on the side of the first shaft **40** is communicated with the exterior via the holes **31a** of the metal bush **31.** The holes **31a** and **33** are not indispensable, however if formed, lubricant supplied between the metal bush **31** and the first shaft **40** is supplied to the smaller-diameter-section **72** of the friction members **70** and to the teeth of the gear **30** through the holes **33.** The lubricant supplied to the smaller-diameter-section **72** is further supplied to the friction faces **70a** of the friction members **70** through gaps between the smaller-diameter-section **72** and the openings of the through holes **32.** Especially, during operation of the core drill, the gear **30** is rotating, and larger quantity of lubricant is supplied via centrifugal force generated by the rotation. Thus, the gear **30** in Second embodiment will improve resuppliability of lubricant, heat dispersibility, and dischargibility of material shavings, thereby making transmission torque more stabilized under a slippage condition.

In use of such a core drill **1,** a handgrip is gripped to put a switch **1a** on. Then, a motor **11** is activated, and the rotation is transmitted via the power transmission section **13** to the core bit **12** to allow the core bit **12** to rotate. Pressing the rotating core bit **12** against a predetermined perforating position on, for example a concrete construction permits perforation. During a perforating operation, the blade edge of the core bit **12** will bite into a concrete construction and therefore a load of the motor **11** will increase, and when a transmission torque reaches to a maximum transmission torque, the friction faces **70a** of the friction members **70** become slippery, thereby preventing excessive torque from being applied to the motor **11.**

The core drill **1** according to the present embodiments is operable if fixed to a stand **2,** as Fig. 6 shows. The core drill **1** has another switch **1c** on a side face thereof in addition to the switch **1a** on the handgrip, and a change section (not shown) is provided for selecting which switches should be used. In a case where the core drill **1** is used fixed to the stand **2,** the switch **1c** on the side face of the drill is normally convenient for use, and upon putting the switch **1c** on, the motor is activated, and pressing a core bit **12** (not shown) against a predetermined perforating position allows a perforating operation as done with the use of the above-described hand-held core drill.

### Slip operation tests of the power transmission section of the core drill

Slip operation tests were conducted with respect to the core drill 1 of Embodiments and that of Comparative Embodiment. In the core drill of Comparative Embodiment, conventional components were used as an equivalent to the gear **30** and the friction members **70** of the power transmission section **13.** Specifically, the gear used in Comparative Embodiment and corresponding to the gear **30** does not have any through holes. As a member corresponding to the friction members, ring-shaped friction plates were used. These friction plates have flat side faces, and each of the both side faces is used as a friction face. Further, these friction plates have a thickness of which size is identical to that of the larger-diameter-section **71** of the friction face **70,** and have an outer diameter of which size is identical to a size which a distance from the center of the gear **30** to the center of one of the through holes **32** and a radius of the through holes are added. Further, a diameter of the through holes of the friction plates has a size identical to a size which a radius size of the through holes is subtracted from the distance from the center of the gear **30** to the center of one of the through holes **32.** Conditions other than these conditions were identical to those of the core drill 1 in Embodiments.

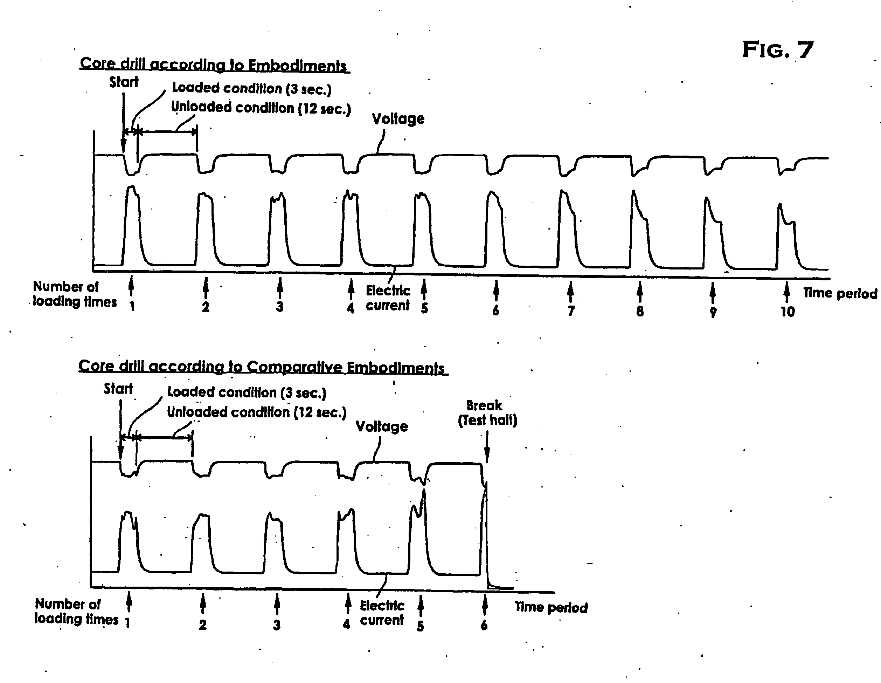

The slip operation tests were conducted in a manner that the core drill in action under a no-loading condition was intermittently imposed torque loads, which exceed the maximum transmission torque, thereby allowing the friction members of the power transmission section to slip. Specifically, loads of 3 seconds were thrown repeatedly with intervals of unload of 12 seconds. The tests were conducted with the loads thrown 10 times. Test results are shown in Fig. 7.

As Fig. 7 shows, the core drill of Comparative Embodiment suffered seizure at the friction plate thereof when a sixth load was thrown, thereby the test was suspended at the moment. In contrast, the core drill of Embodiments did not suffer any seizure even after a 10th load was thrown. Therefore, the core drill of Embodiments was subjected to the above slip operation test again after a two-hour cooling period from completion of the test, which was assumed single cycle. The slip operation test was conducted five cycles after completion of an initial test, however no seizure was confirmed. From the test results, it was confirmed that the power transmission section of the core drill of Embodiments is capable of transmitting predetermined torque under a slip condition for a long period of time in a stable manner.

## Claims

1. A power transmission device for a power tool, comprising: a gear (30) to which rotation from a power source is input; a disk-shaped rotator (41), which is disposed coaxially with the gear and transmits rotation of the gear to the tip tool side; friction means (70) installed between said gear (30) and rotator (41) and kept pressed against the side face or faces of the gear (30) and/or rotator (41), and said power transmission device transmitting rotation of the gear to the rotator (41) with the use of friction caused between the gear and the rotator,
**characterized in that** said friction means comprises plural friction members (70) that have two or more friction faces (70a), the friction faces (70a) being spaced apart from each other.

2. A power transmission device for a power tool according to claim 1, wherein said friction members (70) are fitted into said gear.

3. A power transmission device for a power tool according to claim 2, wherein said friction members are independently detachable with respect to said gear (30), and each friction member (70) has said friction face (70a).

4. A power transmission device for a power tool according to any of claims 1 to 3, wherein said friction face (70a) is circular.

5. A power tool, which is equipped with the power transmission device according to any of claims 1 to 4.

6. A core drill, which is equipped with the power transmission device according to any of claims 1 to 4.

## Patentansprüche

1. Kraftübertragungsvorrichtung für ein Motorwerkzeug, aufweisend:
ein Zahnrad (30), an das Rotation von einer Kraftquelle eingegeben wird;
ein scheibenförmiges Rotationselement (41), das koaxial zu dem Zahnrad angeordnet ist und Rotation des Zahnrads auf die Bestückungswerkzeug-Seite überträgt; eine Reibungseinrichtung (70), die zwischen dem Zahnrad (30) und dem Rotationselement (41) angebracht ist und gegen die Seitenfläche oder Seitenflächen des Zahnrads (30) und/oder des Rotationselements (41) gedrückt gehalten ist, wobei die Kraftübertragungsvorrichtung Rotation des Zahnrads (30) unter Verwendung von Reibung, die zwischen dem Zahnrad und dem Rotationselement hervorgerufen wird, auf das Rotationselement (41) überträgt,
**dadurch gekennzeichnet, dass** die Reibungseinrichtung mehrere Reibungselemente (70) aufweist, die eine Reibungsfläche (70a) aufweisen, wobei die Reibungsflächen (70a) voneinander beabstandet sind.

2. Kraftübertragungsvorrichtung für ein Motorwerkzeug nach Anspruch 1, wobei die Reibungselemente (70) in das Zahnrad eingesetzt sind.

3. Kraftübertragungsvorrichtung für ein Motorwerkzeug nach Anspruch 2, wobei sich die Reibungselemente in Bezug auf das Zahnrad (30) unabhängig voneinander lösen lassen und wobei jedes Reibungselement (70) eine Reibungsfläche (70a) aufweist.

4. Kraftübertragungsvorrichtung für ein Motorwerkzeug nach einem der Ansprüche 1 bis 3,
wobei die Reibungsfläche (70a) kreisförmig ist.

5. Motorwerkzeug, das mit einer Kraftübertragungsvorrichtung nach einem der Ansprüche 1 bis 4 ausgestattet ist.

6. Kernbohrmaschine, die mit einer Kraftübertragungsvorrichtung gemäß einem der Ansprüche 1 bis 4 ausgestattet ist.

## Revendications

1. Dispositif de transmission d'énergie pour outil motorisé comprenant :
un engrenage (30) à l'entrée duquel on applique la rotation d'une source motrice ; un rotateur en forme de disque (41) disposé de manière coaxiale avec l'engrenage et transmettant la rotation de l'engrenage à l'outil d'extrémité ; des moyens de friction (70) installés entre ledit engrenage (30) et ledit rotateur (41) et maintenus appuyés contre la ou les faces latérales de l'engrenage (30) et/ou du rotateur (41) ; et ledit dispositif de transmission d'énergie transmettant la rotation de l'engrenage au rotateur (41) en utilisant la friction produite entre l'engrenage et le rotateur, **caractérisé en ce que** ledit moyen de friction comprend
plusieurs éléments de friction (70) ayant une face de friction (70a), les faces de friction (70a) étant espacés les uns des autres.

2. Dispositif de transmission d'énergie pour outil motorisé selon la revendication 1, dans lequel lesdits éléments de friction (70) sont ajustés dans ledit engrenage.

3. Dispositif de transmission d'énergie pour outil motorisé selon la revendication 2, dans lequel lesdits éléments de friction sont indépendamment démontables dudit engrenage (30), et chaque élément de friction (70) possède ladite face de friction (70a).

4. Dispositif de transmission d'énergie pour outil motorisé selon l'une quelconque des revendications 1 à 3, dans lequel ladite face de friction (70a) est circulaire.

5. Outil motorisé équipé du dispositif de transmission d'énergie selon l'une quelconque des revendications 1 à 4.

6. Perceuse équipé du dispositif de transmission d'énergie selon l'une quelconque des revendications 1 à 4.
